Europäisches Patentamt

European Patent Office

Office européen des brevets

(11) Veröffentlichungsnummer: **0 287 881**
**A1**

(12) **EUROPÄISCHE PATENTANMELDUNG**

(21) Anmeldenummer: **88105343.3**

(22) Anmeldetag: **02.04.88**

(51) Int. Cl.⁴ **C02F 9/00 , C02F 1/28 , C02F 1/52**

(30) Priorität: **11.04.87 DE 3712383**

(43) Veröffentlichungstag der Anmeldung:
**26.10.88 Patentblatt 88/43**

(84) Benannte Vertragsstaaten:
**AT BE CH DE ES FR GB GR IT LI LU NL SE**

(71) Anmelder: **Ralf F. Piepho Abwassertechnik GmbH**
**Rittergut 2**
**D-3015 Wennigsen 5(DE)**

(72) Erfinder: **Piepho, Ralf F.**
**Rittergut 2**
**D-3015 Wennigsen 5(DE)**

(74) Vertreter: **Rücker, Wolfgang, Dipl.-Chem.**
**Hubertusstrasse 2**
**D-3000 Hannover 1(DE)**

(54) **Verfahren zur Aufbereitung von Abwässern landwirtschaftlicher Betriebe, insbesondere Gülle.**

(57) Beschrieben wird die Aufbereitung landwirtschaftlicher Abwässer, insbesondere von Gülle, durch ein mehrstufiges Verfahren, wobei zunächst mechanisch durch Filtrieren, Dekantieren oder Zentrifugieren die Feststoffe abgetrennt werden und die verbleibende Flüssigkeit mit einem Reaktionstrennmittel behandelt wird, das aus Kalk, Bentoniten, Elektrolyten und Flockungsmitteln besteht, nachdem vorher die Flüssigkeit mit einer umweltverträglichen Dicarbonsäure, wie Adipinsäure, versetzt ist und nach Abtrennung des Niederschlages zwei Nachbehandlungen mit Aktivkohle und Bleicherden stattfinden, worauf erneut mit einem Bentonit, Talkum und Flockungsmittel enthaltenden Mittel behandelt wird, der Feststoff abgetrennt und das anfallende, von Schadstoffen weitgehendst befreite Filtrat verrieselt wird.

EP 0 287 881 A1

## Verfahren zur Aufbereitung von Abwässern landwirtschaftlicher Betriebe, insbesondere Gülle

Die Erfindung betrifft ein Verfahren zur Aufbereitung der Abwässer landwirtschaftlicher Betriebe, insbesondere der Abwässer von Großmästereien, Geflügelfarmen, Großstallungen usw., insbesondere die in solchen Betrieben anfallende Jauche unterschiedlichster Zusammensetzung.

Die in den Großstallungen und Großmästereien oder Geflügelfarmen anfallenden Mengen an Mist und Gülle (Jauche) sind ein Problem, was ihre Verwertung oder Aufbereitung betrifft.

Die in der Landwirtschaft früher übliche Methode, mit dieser Gülle die Felder zu düngen, ist aufgrund der beschränkten landwirtschaftlichen Fläche, die diesen Betrieben zur Verfügung steht, nicht mehr praktikabel.

Ferner können schon durch den Umstand, daß diese landwirtschaftlichen Betriebe in den wichtigsten Anbau- und Viehzuchtgebieten nur leistungsschwache Vorfluter zur Verfügung haben, geringe Mengen dieser Abfallprodukte in Gewässern verheerende Wirkungen auslösen. Diese Abwässer sind nämlich besonders konzentriert an hochgradig zersetzlichen organischen Bestandteilen und die Einleitung solcher Abwässer in einen Wasserlauf ohne ausreichende vorherige Reinigung hat Sauerstoffschwund, Wucherungen der "Abwasserpilze" und alle damit einhergehenden unangenehmen Begleiterscheinungen zur Folge.

Es ist daher bereits vorgeschlagen worden (DE-OS 26 42 332), den Mist mit gebranntem oder ungelöschtem Kalk zu vermischen, so daß er trocken wird, ihn zu mahlen, zu walzen oder zu sieben und dann als Dünger zu verwenden.

Es ist auch bekannt, einen streufähigen Dünger durch Mischen von Hühnermist mit trockenem Kalk zu erzeugen (DE-OS 19 54 629) oder gemäß DE-OS 32 25 454 fäkale Abfälle durch Behandlung mit Tonmineralien aufzubereiten, indem man mit fäkalienspezifischen anaeroben und aeroben Mikroorganismen und mit das Wachstum dieser Mikroorganismen fördernden Präparaten sowie mit Kalk angereichertem smektitischen Ton auf die fäkalen Abfälle einwirkt und siem dann so behandelt vor dem Ausbringen mit einem sauren Phosphat versetzt.

Auch die Vermischung von Hühnermist mit Bentonitmehl und gebranntem Kalk sowie einem Volumen Gülle zu einem rieselfähigen körnigen Dünemittel zu verarbeiten, ist bekannt (DE-OS 33 17 241).

Die Verarbeitung landwirtschaftlicher Abwässer, insbesondere gülle- oder jauchehaltiger Abwässer mit organischen Bestandteilen ist nach diesem bekannten Verfahren zwar möglich, jedoch ist das anfallende Aufarbeitungsprodukt mit den großen Mengen an Kalk, Tonmineralien und dgl. nicht nur aufwendig, sondern führt auch zu einem Problem der Deponie. Es ist nämlich zu bedenken, daß die Mengen landwirtschaftlicher Abwässer, die anfallen, ganz beträchtlich sind, wenn beispielsweise eine Kuh täglich etwa 13,5 l Harn und ein Schwein 1,5 l Harn liefert. Hinzu kommt, daß bei geschlossener Tierhaltung in Stallgebäuden ein Teil der Einstreue mit in das Abwasser geht sowie zusätzliches Reinigungswasser für den Stall, so daß in der Rinderzucht beispielsweise mit 45 l pro Rind und Tag zu rechnen ist, in einer Schweinemästerei zwischen 10 und 20 l pro Tag und Schwein. Bei den vielen Hunderten und Tausenden von Schweinen, die heute in Stallbetrieben gezogen und gemästet werden, ist die anfallende Abwassermenge gewaltig und die dafür erforderliche Kalkmenge ebenfalls von beachtlichem Ausmaß, was auch beträchtliche Kosten verschlingt.

Die Zusammensetzung der Gülle ist stark unterschiedlich. Nach Meinck, "Industrieabwässer", 4. Auflage, 1968, hat Rindergülle einen biochemischen Sauerstoffbedarf von 16 g/l und Schweinegülle einen solchen von 30 g/l. Der $BSB_5$-Wert der Schweinejauche beträgt 7 500 mg/l, der der Rinderjauche 18 000 mg/l. Ein besonderes Charakteristikum von Gülle ist der hohe Ammoniak- bzw. Schwefel-Wasserstoffgehalt. Letzterer ist ausgesprochen toxisch. Der Gehalt an $NH_3$ liegt zwischen 1 000 und 4 500 mg/l und der $H_2S$-Gehalt liegt im Mittel bei 100 mg/l. Der pH-Wert der Gülle liegt zwischen 7,0 und 7,4.

Es handelt sich also um einen Stoff von außerordentlicher Menge und mit beträchtlichen Risikofaktoren für die Umwelt, d. h. für die Fauna und Flora als auch für den Menschen, wenn man bedenkt, daß es heute schon viele Gebiete in Europa gibt, in denen der Nitrat- und Nitridgehalt des Grundwassers so hoch ist, daß es nicht mehr zur Ernährung des Menschen verwendet werden kann.

Es ist daher Aufgabe der vorliegenden Erfindung, ein Verfahren zur Verwertung landwirtschaftlicher Abwässer vorzuschlagen, das eine Lösung dieses oben aufgezeigten vielfältigen Problems ist, das den Anfall beträchtlicher zu deponierender oder sonstwie zu verwertender Reaktionsprodukte vermeidet, das ein Endprodukt liefert, welches wieder nutzbar ist, insbesondere nutzbar durch die Land- oder Forstwirtschaft und durch Gärtnereibetriebe, das sogar in der Teichwirtschaft eingesetzt werden kann, keine aufwendige und kostspielige Lagerung großer Mengen von Reaktionsmitteln oder Hilfsstoffen erfordert und das sowohl kontinuierlich als auch diskontinuierlich betreibbar ist, an jede Größe des zu entsorgenden landwirtschaftlichen Betriebes angepaßt werden kann und in seiner Führung und der zu verwendenden Geräte und Hilfsmittel ebenfalls ohne Probleme ist.

Gelöst wird diese Aufgabe nun erfindungsgemäß durch den nachfolgend beschriebenen Verfahrensgang:

a) Die Gülle wird durch Zentrifugieren, Filtrieren oder Dekantieren von Feststoffen befreit;

b) das Filtrat wird mit 0,4 bis 1,0 Gew.-% einer niederen aliphatischen umweltverträglichen Dicarbonsäure versetzt und verweilen gelassen;

c) der so behandelten Flüssigkeit werden 0,5 bis 0,8 % eines Reaktionstrennmittels zugesetzt und innig mit der Flüssigkeit vermischt, der sich bildende Niederschlag abfiltriert und das Filtrat

d) mit etwa 0,5 % Aktivkohle vermischt und wenigstens 15 Minuten gerührt, sodann mit einer geringen Menge Bleicherdenvermischt, wieder gerührt und schließlich erneut mit einem Reaktionstrennmittel vermischt, welches sich aus Bentonit und anderen Tonmineralien, Talkum und Flockungshilfsmittel zusammensetzt. Nach einer Verweilzeit von einigen Minuten wird

e) das Gemenge filtriert, der Niederschlag abgetrennt und das sich ergebende Filtrat verrieselt.

Bei diesem erfindungsgemäßen Verfahren wird zunächst der gröbere Feststoff durch Zentrifugieren, Filtrieren oder Dekantieren abgetrennt. Welches dieser drei Verfahren angewandt wird, hängt von den jeweiligen Umständen ab, von der Art der Gülle, der Größe des Betriebes und dgl. mehr.

Der anfallende Feststoff kann nun in vielfältiger Weise verwandt werden, er kann beispielsweise benutzt werden als Dünger oder Material zur Herstellung eines Düngers, oder er kann in einem Faulbehälter anaerob zur Erzeugung von Methangas herangezogen werden.

Die sich ergebende Flüssigkeit ist nun bis auf feine Feststoffteilchen, Schleime und sonstige physikalisch oder chemisch vorbehandelte gelöste Stoffe frei von Feststoffen.

Diese nun vorliegende Flüssigkeit wird zur Vorbereitung auf die sich anschließende Behandlung mit dem Reaktionstrennmittel, welches sich aus Kalk oder gelöschten Kalk, aktivierten oder nicht aktivierten Bentoniten, Salzen und Flockungsmitteln zusammensetzt, mit einer geringen Menge von 0,4 bis 1,0 Gew.-% einer niederen aliphatischen umweltverträglichen Dicarbonsäure versetzt, beispielsweise mit Adipinsäure und etwa 20 Minuten verweilen gelassen.

Dieses Verweilenlassen kann in einem großen Behälter geschehen oder bei kontinuierlicher Arbeitsweise in einer entsprechend dimensionierten Rohrschlange, in der die so behandelte Flüssigkeit fließt, aber für eine Zeit, die dieser genannten Spanne entspricht, ehe sie in eine Trennvorrichtung eintritt, wie sie beispielsweise dargestellt ist in dem europäischen Patent 0 067 959 der Anmelderin.

Solche Vorrichtungen sind bekannt und können auch in abgewandelter Gestalt eingesetzt werden. Wichtig ist lediglich, daß die Flüssigkeit in einen Reaktionsbehälter eingespeist wird, in den das Trennmittel hineindosiert wird und in dem vermittels Rührwerke oder Rührturbinen eine kräftige und innige Vermischung der vorbehandelten Gülleflüssigkeit mit dem Trennmittel erfolgt.

Nach einer Verweilzeit in dieser Vorrichtung wird der sich bildende mehr oder weniger umfangreiche Niederschlag durch ein Kratzband oder andere Vorrichtung ausgetragen oder die Flüssigkeit über ein Filter gegeben.

Der nun anfallende erste größere Niederschlag ist um ein Vielfaches kleiner als der, der nach den bekannten Verfahren anfällt, die mit Tonmineralien oder Kalk arbeiten. Der Niederschlag, der hier entsteht, bindet die ausgeschiedenen Teile deponierbar fest, er kann also, falls keine andere Verwertung möglich ist, ohne Probleme umweltsicher deponiert werden.

Das Filtrat, welches jetzt anfällt, ist klar, aber es kann noch gefärbt sein, und es enthält auch noch Stoffe und Verbindungen, die durch die nachfolgenden Verfahrensschritte nun entfernt werden.

Das klare, aber ggf. mehr oder weniger intensiv gefärbte Filtrat wird in einem Behälter mit Rührer mit einer Menge Aktivkohle versetzt, die etwa 0,5 Gew.-% ausmacht. Alle diese Prozentangaben beziehen sich auf eine Kubikmetergülle so, wie sie im landwirtschaftlichen Betrieb letztlichanfällt.

Die mit der Aktivkohle vermischte Flüssigkeit wird nun etwa 15 bis 20 Minuten gerührt und kann jetzt im gleichen Behälter mit Bleicherdenvermischt werden, oder sie kann in einen gesonderten Behälter überführt und dort mit Bleicherden vermischt werden. Bei der Bleicherde handelt es sich um kolloide, feinst zerteilte wasserhaltige Aluminium- und/oder Magnesiumsilikate aus der Montmorillonit-Gruppe, also beispielsweise um Bentonite oder Fullererde oder dgl., wie sie im Handel erhältlich ist. Diese Bleicherden können zur Erhöhung der Adsorptionskraft mit anorganischen Säuren behandelt sein. Nach der Zugabe der Bleicherden wird ebenfalls wieder eine bestimmte Zeit gerührt, etwa 15 bis 20 Minuten oder länger, je nach Art und Konsistenz oder Zusammensetzung der Gülle.

Außerdem wird die nun mit der Aktivkohle und den Bleicherden versetzte Flüssigkeit erneut einer Vorrichtung aufgegeben, wie sie beispielsweise in der oben genannten europäischen Patentschrift beschrieben ist und mit einem Mittel behandelt, das sich aus Bentoniten, aktivierten und nicht aktivierten Bentoniten, Talkum und einem Flockungshilfsmittel, beispielsweise Polyacrylamid, zusammen-

· setzt.

Nach einer entsprechenden Einwirkungszeit unter intensivem Rühren und einer sich anschließenden Verweilzeit wird der Feststoff entfernt, der jetzt auch noch die Bleicherden und die Aktivkohle aus den vorherigen Behandlungsstufen enthält sowie weitere Stoffe, die in der Flüssigkeit enthalten waren. Das jetzt anfallende klare farblose Filtrat ist im wesentlichen frei von Schadstoffen.

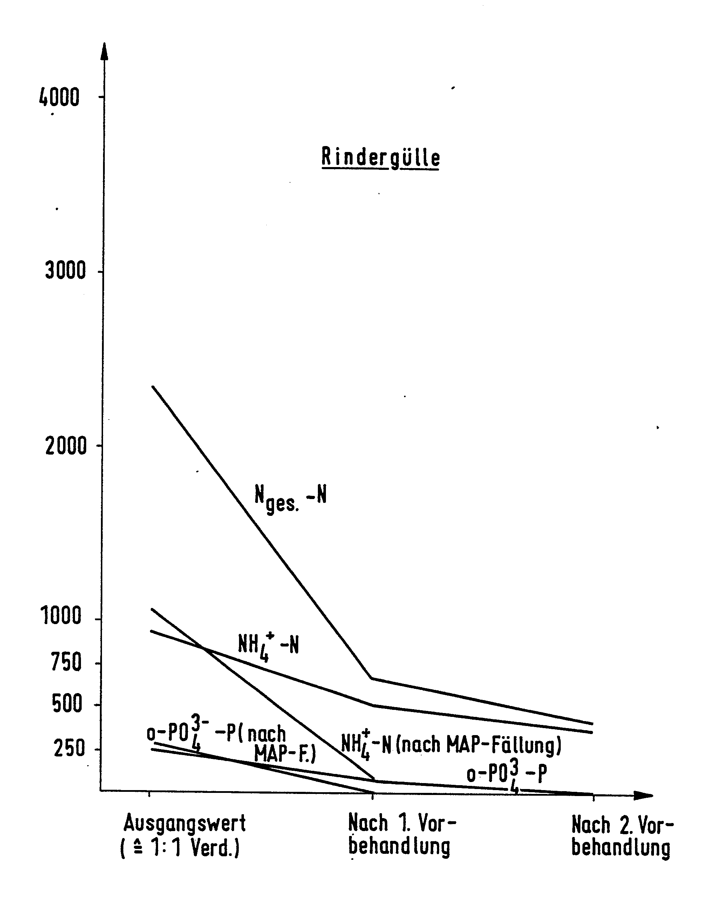

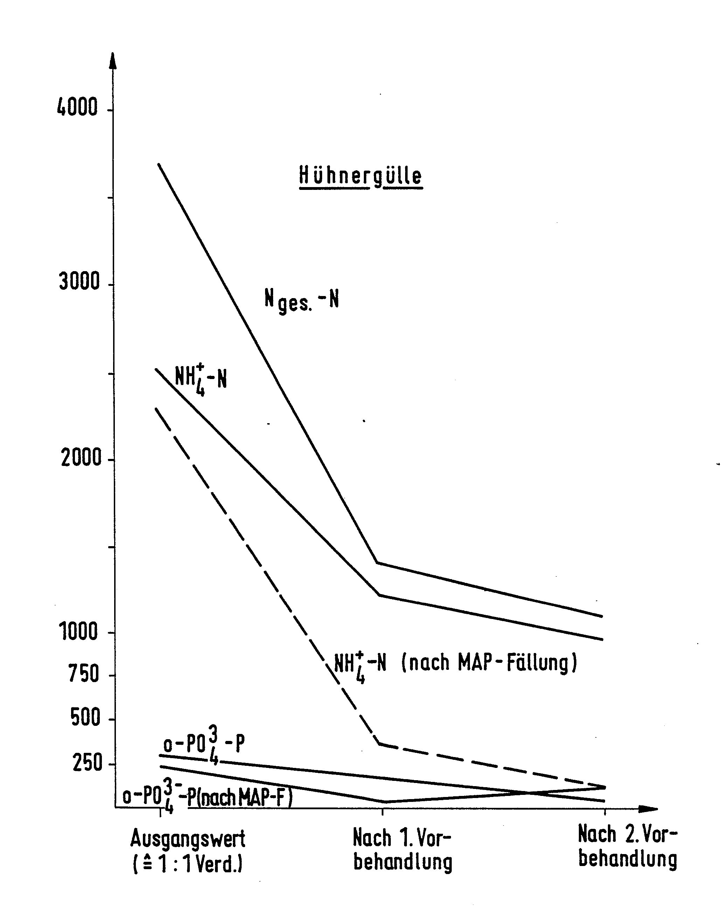

Zwei Graphiken, bezeichnet als Fig.2 bzw. Fig.3, sind beigefügt. Daraus ergibt sich, daß nach der zweiten Vorbehandlung, also am Ende des erfindungsgemäß beschriebenen Verfahrens die Schadstoffe, bis auf wenige Prozente, beträchtlich verringert sind.

Bei einer Verdünnung der Gülle im Verhältnis 1:1 ist eine weitere Reduzierung der Schadstoffe möglich.

Das in der letzten Vorrichtung zugegebene Mittel hat beispielsweise folgende Zusmmensetzung:

64,1 % Bentonitmehl,

31 % aktivierten Bentonit,

2,9 % Talkum und

2 % Flockungshilfsmittel in Form von Polyacrylamid.

Die Erfindung wird nun anhand eines Schaubildes näher erläutert.

Die in diesem Schaubild dargestellten Vorrichtungen sind nur Beispiele. Sie können beträchtlich variieren. So können beispielsweise statt des ersten Reaktionsbehälters, in welchem die Behandlung mit der Dicarbonsäure stattfindet, auch statt sich horizontal zu erstrecken, vertikal angeordnet oder ein zylindrischer Behälter sein. Ebenso können die Dosiereinrichtungen, auf die weiter unten noch hingewiesen wird, andere Gestalt und Form haben. Das gleiche gilt für den Austrag der Feststoffe, die in anderer als der dargestellten Form erfolgen.

Der Verfahrensablauf erfolgt unter Berücksichtigung des Schaubildes von unten links nach oben rechts. Die Anordnung ist so gewählt, um alle Stufen möglichst anschaulich auf einem Zeichnungsblatt unterzubringen, ohne ein Querformat zu benutzen.

Das landwirtschaftliche Abwasser, insbesondere die mit sonstigem Betriebswasser versetzte Gülle aus Großtierhaltungen, die zunächst von den Feststoffen in einem mechanischen Verfahren durch Zentrifugieren, Filtrieren oder Dekantieren befreit worden ist, wird über eine nicht dargestellte Leitung dem Behälter 1 in der Zeichnung zugeführt.

In diesem Behälter gibt man, wie durch den Pfeil 2 angedeutet, vorzugsweise über eine Dosiervorrichtung 3 der im Behälter befindlichen Flüssigkeit, sprich Gülle, eine Menge einer niederen aliphatischen Dicarbonsäure, vorzugsweise Adipinsäure, zu. Diese Menge kann zwischen 0,4 und 1,0 Gew.-% betragen, je nach Art der Gülle oder des Abwassers, und es kann auch über eine nicht dargestellte Leitung, falls erforderlich, mit Wasser verdünnt werden. Das mit dieser Dicarbonsäure versetzte Abwasser wird nach einer Verweilzeit von etwa 20 Minuten einer mechanischen Trennvorrichtung 4 zugeführt, in der die Flüssigkeit mit einem Trennmittel über eine Dosieranlage 5 versetzt, intensiv vermischt und eine Zeitspanne reagieren gelassen wird.

Bei diesem Trennmittel handelt es sich um eine Substanz, wie sie beispielsweise aus der DE-AS 25 27 987 bekannt ist und die aus Talkum, Aluminiumsulfat, Bentonit, Kalk, aktiviertem Bentonit und einem Flockungsmittel, beispielsweise einem Polyacrylamid, besteht. Es hat sich dabei als vorteilhaft erwiesen für den gesamten Aufbereitungsprozeß, daß die sonst in dem Mittel enthaltene Adipinsäure vor her allein mit dem Abwasser reagieren gelassen wird.

Nach dieser Verweilzeit scheidet sich, je nach Konzentration, ein Niederschlag ab, welcher das Trennmittel mit den daran sorbierten Stoffen des Abwassers enthält. Dieser Niederschlag wird, wie bei 6 gezeigt, ausgetragen, beispielsweise über ein Kratzband, und das Filtrat wird über eine Leitung 7 einem weiteren Reaktionsbehälter 8 zugeführt, in welchem das nun klare, jedoch meistens noch gefärbte Abwasser mit Aktivkohle in einer Menge von etwa 0,5 Gew.-% intensiv vermischt und eine Zeitspanne von 15 bis 20 Minuten verweilen gelassen wird.

Die Aktivkohle sorbiert weitere im Abwasser enthaltene Stoffe. Das Abwasser wird sodann mit der darin suspendierten Aktivkohle über die Leitung 9 einem weiteren Reaktionsbehälter 10 zugeführt, in dem das Abwasser jetzt mit Bleicherden der einen oder der anderen Art vermischt wird, ebenfalls unter heftiger Turbulenz und wieder eine Verweilzeit von 15 bis 20 Minuten vorgesehen ist.

Die Verweilzeiten in den Reaktionsbehältern 8 und 10 können auch eine längere Zeitspanne erfordern, was letztlich durch die Art der Gülle, ihrer Verunreinigung und Konzentration an Stoffen bestimmt ist.

Nachdem das Abwasser die erforderliche Zeit verweilen gelassen worden ist, wird es nun mit den darin enthaltenen Sorpitonsmitteln, nämlich Aktivkohle und Bleicherden, über die Leitung 11 einer weiteren Vorrichtung 12 zugeführt. In dieser Trennvorrichtung wird ein Trennmittel zugegeben in einer Menge von etwa 0,5 bis 1 %, welche aus aktiviertem Bentonit und nicht aktiviertem Bentonit besteht sowie aus Talkum und einem Flockungshilfsmittel, beispielsweise das oben schon erwähnte Polyacrylamid.

Besonders vorteilhaft hat sich eine Mischung herausgestellt, die 64,1 % Bentonit enthält, 30,1 % aktivierten Bentonit, 2,9 % Talkum und 2,0 % Flockungshilfsmittel.

In der Vorrichtung 12 findet jetzt wieder eine Reaktion mit dem oben beschriebenen Trennmittel und den im Abwasser enthaltenen Stoffen statt. Es entsteht wieder ein Niederschlag, der ausgetragen wird, beispielsweise durch ein Kratzband, oder, wie weiter oben mit Bezugnahme auf die europäische Patentschrift, über en Filterband, während das nun anfallende klare, nur noch sehr geringe Mengen Fremdstoffe enthaltende Abwasser über die Leitung 13 abgeführt wird. Diese Leitung 13 kann in enen Vorratsbehälter führen oder mit einer Leitung verbunden sein, die auf ein Feld führt, oder sie kann in einen Kessel einmünden, der auf einem Wagen befestigt ist und dessen Inhalt dann auf Feldern verrieselt wird, wo also das Wasser im Rahmen der landwirtschaftlichen Bewirtschaftung wieder verwertet wird.

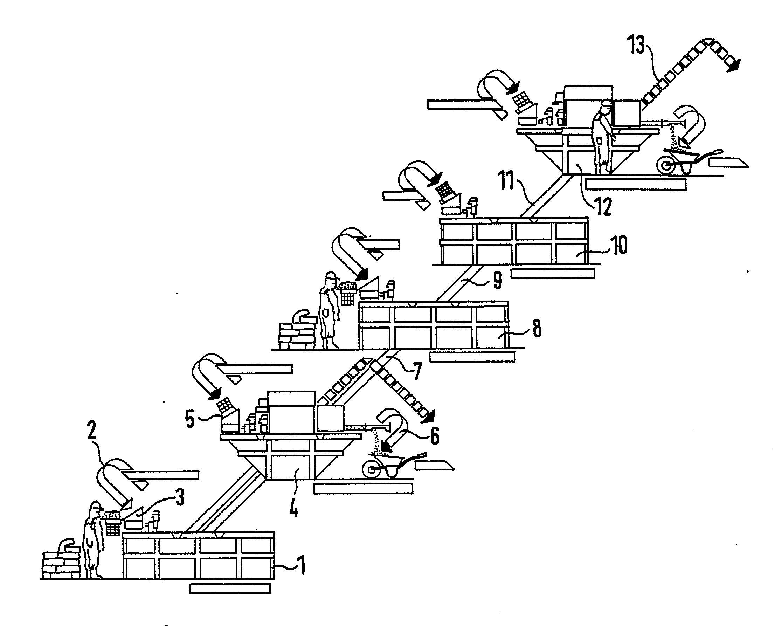

In der Fig. 1 der beigefügten Zeichnung sind die Vorrichtungen 4 und 12 so dargestellt, als würden sie keine Filtereinrichtungen haben, sondern die Trennung zwischen Flüssigkeit und Feststoffen würde durch Absitzenlassen herbeigeführt. Dies ist durchaus möglich, jedoch ist auch eine Vorrichtung verwert bar, wie sie in dem oben genannten europäischen Patent beschrieben ist.

In manchen Fällen ist es auch möglich, die beiden Behälter 8 und 10 zu einem Behälter zusammenzufassen und erst die Aktivkohle und dann die Bleicherde zuzusetzen. Es kann aber auch ebensogut umgekehrt verfahren werden. Vorteilhafter jedoch ist die oben beschriebene Reihenfolge, daß nämlich zuerst dem das von den wesentlichen Feststoffen und den sonstigen Inhaltsstoffen befreiten Abwasser die Aktivkohle zugesetzt wird, und zwar kann die Aktivkohle sowohl in pulveriger als auch in körniger Form zugesetzt werden, besser in pulveriger Form.

Offensichtlich ist dieser Vorteil darin zu sehen, daß die Aktivkohle mit ihrer großen Oberfläche nicht durch die anwesenden Bleicherden beeinträchtigt wird und so Gase und schädliche Farb- und Geruchsstoffe besser entfernen kann, wogegen die nachfolgende Behandlung mit Bleicherden die Aktivkohle adsorbiert und ölige und fettige Bestandteile sowie Farbstoffe besser aufnimmt.

Die oben beschriebene Vorrichtung aus an sich bekannten Elementen kann in einfacher Weise, beispielsweise in Form von Containern, zusammengefaßt und aufgestellt werden. So könnte z. B. die gesamte in der Zeichnung dargestellte Anlage in zwei Containern untergebracht sein, die übereinanderstehen und der obere Container die Anlagenteile 1 und 4 enthalten, während die Teile 8, 10 und 12 in dem unteren Container enthalten sind.

Die Zentrifuge ist in der Zeichnung nicht dargestellt, obwohl sie einen erfindungsgemäß wesentlichen Bestandteil darstellt. Diese kann aber am Ausgang des Güllesammelbehälters angeordnet sein oder an einer anderen geeigneten Stelle, weil sie offensichtlich die Einrichtung ist, die von all dem am empfindlichsten hinsichtlich ihrer Antriebsanlage ist.

Außerdem kann es sich bei der Zentrifuge um eine besondere Konstruktion handeln, wenn auch in vereinfachter Ausgestaltung, beispielsweise in der Art einer Dekantierzentrifuge, bei der die Feststoffteilchen unter dem Einfluß der Fliehkraft an die Trommelwand gedrückt werden und dort von einer langsam umlaufenden Transportschnecke entgegen der Fliehkraft aus dem Bereich des Abwassers herausgeschoben und ausgestoßen werden.

## Ansprüche

1. Verfahren zur Aufbereitung der Abwässer landwirtschaftlicher Betriebe, insbesondere der Abwässer von Großmästereien, Geflügelfarmen, Großstallungen usw., insbesondere Gülle unter Verwendung von tonmineralischen Stoffen, gekennzeichnet durch den nachfolgenden Verfahrensgang:

a) Die Gülle wird durch Zentrifugieren, Filtrieren oder Dekantieren von Feststoffen befreit;

b) das Filtrat wird mit 0,4 bis 1,0 Gew.-% einer niederen aliphatischen umweltverträglichen Dicarbonsäure versetzt ur'd verweilen gelassen;

c) der so behandelten Flüssigkeit werden 0,5 bis 0,8 % eines Reaktionstrennmittels zugesetzt und innig mit der Flüssigkeit vermischt, der sich bildende Niederschlag abfiltriert und das Filtrat

d) mit etwa 0,5 % Aktivkohle vermischt und wenigstens 15 Minuten gerührt, sodann mit einer geringen Menge Bleicherden vermischt, wieder gerührt und schließlich erneut mit einem Reaktionstrennmittel vermischt, welches sich aus Bentonit und anderen Tonmineralien, Talkum und Flockungshilfsmittel sammensetzt. Nach einer Verweilzeit von einigen Minuten wird

e) das Gemenge filtriert, der Niederschlag abgetrennt und das sich ergebende Filtrat verrieselt.

2. Verfahren nach Anspruch 1, dadurch gekennzeichnet, daß die landwirtschaftlichen Abwässer sich aus Gülle und sonstigen im landwirtschaftlichen Betrieb anfallenden Wasser zusammensetzen.

3. Verfahren nach Anspruch 1, dadurch gekennzeichnet, daß in der Verfahrensstufe b) als niedere aliphatische Dicarbonsäure Adipinsäure eingesetzt wird.

4. Verfahren nach Anspruch 1 bis 3, dadurch gekennzeichnet, daß die Behandlung der vom Niederschlag befreiten Flüssigkeit des Abwassers mit Aktivkohle und anschließend mit Bleicherden in einem Reaktionsbehälter erfolgt, jedoch in der angegebenen Reihenfolge.

5. Verfahren nach Anspruch 1 bis 3, dadurch gekennzeichnet, daß die Behandlung der vom Niederschlag befreiten Flüssigkeit in einem Reaktionsbehälter zunächst mit Aktivkohle und anschließend in einen weiteren Reaktionsbehälter überführt wird, in welchem die Behandlung mit den Bleicherden erfolgt.

6. Verfahren nach Anspruch 1 bis 5, dadurch gekennzeichnet, daß die Behandlung der Flüssigkeit nach der ersten Behandlung mit einem Trennmittel und nach der Behandlung mit Aktivkohle und Bleicherden mit einem Mittel erfolgt, welches aus Bentonitmehl, aktiviertem Bentonit, Talkum und einem Flockungshilfsmittel besteht.

Rindergülle

$N_{ges.}$-N

$NH_4^+$-N

o-PO$_4^{3-}$-P(nach MAP-F.)

$NH_4^+$-N (nach MAP-Fällung)

o-PO$_4^{3-}$-P

4000

3000

2000

1000

750

500

250

Ausgangswert ( $\triangleq$ 1:1 Verd.)

Nach 1. Vor-behandlung

Nach 2. Vor-behandlung

**Hühnergülle**

$N_{ges.}$-$N$

$NH_4^+$-$N$

$NH_4^+$-$N$ (nach MAP-Fällung)

$o$-$PO_4^{3-}$-$P$

$o$-$PO_4^{3-}$-$P$ (nach MAP-F)

Ausgangswert
($\hat{=}$ 1 : 1 Verd.)

Nach 1. Vor-
behandlung

Nach 2. Vor-
behandlung

Europäisches
Patentamt

**EUROPÄISCHER RECHERCHENBERICHT**

Nummer der Anmeldung

| | EINSCHLÄGIGE DOKUMENTE | | EP 88105343.3 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| A | DE - A1 - 3 221 451 (HOECHST)<br>* Ansprüche 1,9,10 *<br>-- | 1 | C 02 F 9/00<br>C 02 F 1/28<br>C 02 F 1/52 | |
| A | AT - B - 313 202 (HEFERMEHL)<br>* Ansprüche 1,8 *<br>-- | 1 | | |
| A | AU - B1 - 40 032/78 (COMMENWEALTH)<br>* Zusammenfassung *<br>-- | 1 | | |
| A | US - A - 4 274 968 (GRUTSCH)<br>* Anspruch 1 *<br>---- | 1 | | |

RECHERCHIERTE
SACHGEBIETE (Int. Cl.4)

C 02 F

Der vorliegende Recherchenbericht wurde für alle Patentansprüche erstellt.

| Recherchenort | Abschlußdatum der Recherche | Prüfer |
|---|---|---|
| WIEN | 15-06-1988 | WILFLINGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82